(19) Europäisches Patentamt
European Patent Office
Office européen des brevets

(11) **EP 2 132 586 B1**

(12) **FASCICULE DE BREVET EUROPEEN**

(45) Date de publication et mention
de la délivrance du brevet:
**01.09.2010 Bulletin 2010/35**

(21) Numéro de dépôt: **08735771.1**

(22) Date de dépôt: **03.04.2008**

(51) Int Cl.:
***G01S 7/41*** *(2006.01)*

(86) Numéro de dépôt international:
**PCT/EP2008/054026**

(87) Numéro de publication internationale:
**WO 2008/122569 (16.10.2008 Gazette 2008/42)**

(54) **METHODE D'ESTIMATION DE SURFACE EQUIVALENTE RADAR**

VERFAHREN ZUR SCHÄTZUNG EINER ÄQUIVALENTEN RADAROBERFLÄCHE

METHOD OF ESTIMATION OF EQUIVALENT RADAR SURFACE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.04.2007 FR 0754251**

(43) Date de publication de la demande:
**16.12.2009 Bulletin 2009/51**

(73) Titulaire: **Commissariat à l'Énergie Atomique et aux Énergies Alternatives**
**75015 Paris (FR)**

(72) Inventeurs:
• **VACUS, Olivier**
**F-33610 Cestas (FR)**
• **MORVAN, Sylvain**
**F-33160 Saint Médard en Jalles (FR)**

(74) Mandataire: **Ilgart, Jean-Christophe**
**BREVALEX**
**3, rue du Docteur Lancereaux**
**75008 Paris (FR)**

(56) Documents cités:
**US-B1- 6 756 935**

• **WILLIAM L CAMERON ET AL: "Simulated Polarimetric Signatures of Primitive Geometrical Shapes" IEEE TRANSACTIONS ON GEOSCIENCE AND REMOTE SENSING, IEEE SERVICE CENTER, PISCATAWAY, NJ, US, vol. 34, no. 3, mai 1996 (1996-05), XP011020715 ISSN: 0196-2892**

• **SHANE ROBERT CLOUDE ET AL: "A Review of Target Decomposition Theorems in Radar Polarimetry" IEEE TRANSACTIONS ON GEOSCIENCE AND REMOTE SENSING, IEEE SERVICE CENTER, PISCATAWAY, NJ, US, vol. 34, no. 2, mars 1996 (1996-03), XP011020688 ISSN: 0196-2892**

• **MARK A. SLETTEN, DAVID J. MC LAUGHLIN: "Radar polarimetry" WILEY ENCYCLOPEDIA OF ELECTRICAL AND ELECTRONICS ENGINEERING, [Online] 27 décembre 1999 (1999-12-27), pages 1-15, XP002459758 USA Extrait de l'Internet: URL:http: //www.mrw. interscience.wiley.com/ emrw/ 9780471346081/eeee/article/W2032/curr ent/pdf> [extrait le 2007-11-23]**

• **J. RICHARD HUYNEN: "Measurement of the Target Scattering Matrix" PROCEEDINGS OF THE IEEE, [Online] vol. 53, no. 8, août 1965 (1965-08), pages 936-946, XP002459759 USA ISSN: 0018-9219 Extrait de l'Internet: URL:http:// ieeexplore.ieee.org/xpls/abs_al l.jsp? arnumber=1446002> [extrait le 2007-11-22]**

• **ROGER. F. HARRINGTON, JOSEPH R. MAUTZ: "Theory of Characteristic Modes for Conducting Bodies" IEEE TRANSACTIONS ON ANTENNAS AND PROPAGATION, vol. AP-19, no. 5, septembre 1971 (1971-09), pages 622-628, XP002459760 cité dans la demande**

**Description**

## DOMAINE TECHNIQUE

La présente invention concerne le domaine de la signature radar et, plus particulièrement de la détermination d'une surface équivalente radar.

## ÉTAT DE LA TECHNIQUE ANTÉRIEURE

La surface équivalente radar ou SER est une grandeur fondamentale caractéristique d'une cible. Elle est utilisée tant dans le domaine militaire que dans le domaine civil (par exemple pour le contrôle aérien) aux fins de discrimination d'un objet, typiquement d'un aéronef.

La SER d'une cible radar est définie de manière classique à partir du bilan de puissance de l'onde émise en direction de la cible et de la puissance de l'onde reçue par le radar. En champ lointain et en approximant les ondes à des ondes planes, l'équation radar s'écrit en effet.

$$P_r = P_e G_e \frac{1}{4\pi d^2} \sigma \frac{1}{4\pi d^2} G_r \frac{\lambda^2}{4\pi} \tag{1}$$

où $P_c$ et $P_r$ sont respectivement les puissances des ondes émise et reçue par le radar, $G_c$ et $G_r$ les gains d'antenne à l'émission et à la réception, $d$ la distance entre le radar et la cible, $\lambda$ la longueur d'onde utilisée par le radar. Le coefficient $\sigma$ est homogène à une surface et ne dépend que de la cible considérée, c'est la SER de la cible.

On trouvera une description plus détaillée de la SER notamment dans l'ouvrage de G.T. Tuck et al. intitulé « Radar cross-section Handbook » chez Peninsula Publishing.

Dans l'expression (1) on a supposé que le radar servant à illuminer la cible était le même que celui servant à la réception de l'onde diffractée, on parle alors de SER monostatique. En règle générale, la SER monostatique dépend de la direction de l'onde incidente, de la fréquence $f$ du radar et des polarisations respectives $\pi_e$ et $\pi_r$ avec lesquelles l'onde incidente est émise et l'onde reçue est analysée. On la note $SER(f, \varphi, \theta, \pi_e, \pi_r)$, où $(\varphi, \theta)$ sont les angles de gisement et de roulis du radar dans un référentiel lié à la cible. Chacune des polarisations $\pi_e$ et $\pi_r$ peut être horizontale ou verticale, c'est-à-dire $\pi_e = H$ ou $V$ ; $\pi_r = H$ ou $V$.

De manière similaire, si le système radar est bistatique, c'est-à-dire si le radar servant à analyser l'onde diffractée est distinct de celui qui sert à illuminer la cible, on parle de SER bistatique. Celle-ci ne dépend plus alors seulement de la direction de l'onde incidente, mais aussi de la direction de l'onde diffractée. On la note $SER(f, \varphi_e, \theta_e, \varphi_r, \theta_r, \pi_e, \pi_r)$ où $(\theta_e, \varphi_c)$, resp. $(\theta_r, \varphi_r)$, sont les angles de gisement et de roulis de l'onde incidente, resp. de l'onde diffractée.

Pour l'estimation de la SER d'un objet, on distingue généralement trois zones fréquentielles :

- une zone basse fréquence (BF), dite aussi zone de Rayleigh, dans laquelle la SER varie en $1/f^4$. Dans cette zone la longueur d'onde est supérieure voire très supérieure aux dimensions caractéristiques de l'objet ;
- une zone de résonance pour laquelle la SER est maximale ;
- une zone haute fréquence (HF) dans laquelle la SER a un comportement asymptotique. Cette zone correspondant à des longueurs d'ondes sensiblement plus faibles que les dimensions caractéristiques de l'objet.

La SER d'un objet peut être mesurée ou bien estimée par simulation.

La mesure d'une SER se fait dans un local anéchoïque, c'est-à-dire dans un local dont les parois sont tapissées d'absorbants, de manière à éviter les échos parasites. La cible est disposée à l'aide d'un positionneur faiblement échogène, généralement sur une colonne verticale en polystyrène orientable autour de son axe propre. La mesure est réalisée, soit au moyen d'une seule antenne, soit au moyen de deux antennes distinctes légèrement décalées angulairement l'une par rapport à l'autre. Selon le cas on obtient les valeurs de SER monostatique ou de SER quasi-monostatique, pour un angle ou une pluralité d'angles de gisement. L'antenne d'émission doit être choisie de manière à générer une onde aussi plane que possible.

L'obtention de la SER par mesure présente de nombreuses limitations.

Tout d'abord, il est très coûteux de construire un local anéchoïque pour des objets de tailles importantes. Ce problème est encore aggravé en basse fréquence où l'efficacité des absorbants est moindre. Les mesures effectuées sont généralement affectées par des bruits de sources diverses (échos parasites, bruit d'instrumentation etc.)

En régime basse fréquence encore, l'antenne d'illumination doit être de grande taille de manière à pouvoir générer des ondes approximativement planes. Enfin, on n'effectue généralement que quelques mesures de valeurs de SER, typiquement selon quelques angles de gisement dans un plan équatorial de sorte que l'on ne dispose que d'une représentation bidimensionnelle assez sommaire de la cible. L'obtention d'une SER tridimensionnelle par mesure est très rare et bien souvent impossible.

En outre, l'utilisation d'un système à antennes d'émission et de réception distinctes, souvent nécessaire en basse fréquence, ne permet pas d'obtenir une estimation exacte de la SER monostatique.

Au lieu d'effectuer des mesures, il est possible dans certains cas d'estimer la SER par simulation, notamment grâce à la méthode dite des points brillants. Selon cette méthode, la cible est décomposée en un ensemble de contributeurs élémentaires indépendants (ou points brillants), chaque contributeur étant affecté d'un coefficient de pondération. En d'autres termes l'onde diffractée est alors considérée comme la somme d'une pluralité d'ondes sphériques, chaque onde sphérique étant émise par un point brillant. La SER de la cible peut alors s'exprimer comme :

$$\sigma = \left| \sum_{n=1}^{N} a_n e^{i\vec{k}\vec{u}_n} \right| \qquad\qquad , \qquad (2)$$

où les $a_n$, $n = 1,..,N$ sont les coefficients de pondération complexes des différents contributeurs, $\vec{u}_n$ sont les vecteurs donnant leurs positions respectives et $\vec{k}$ est le vecteur d'onde de l'onde diffractée.

La méthode des points brillants s'avère toutefois difficile à mettre en oeuvre pour des formes de cible complexes et, quoi qu'il en soit, ne permet pas de déterminer la SER en basse fréquence.

Le document US6756935 décrit un procédé d'estimation de surface équivalente radar d'un objet donné à partir d'un modèle de diffraction dudit objet.

Le but de l'invention est de proposer une méthode d'estimation de SER qui ne présente pas les inconvénients précités, c'est-à-dire qui permette entre autres d'obtenir une SER plus complète et plus proche de la SER réelle de la cible, y compris à basse fréquence.

**EXPOSÉ DE L'INVENTION**

La présente invention est définie comme une méthode d'estimation de surface équivalente radar d'un objet donné à partir d'un modèle de diffraction dudit objet, ledit modèle pouvant être représenté par une matrice ($\mathbf{A_b}$) de rapports d'amplitudes complexes d'onde diffractée et d'onde incidente, pour une première pluralité ($4N^2$) de couples de directions et de polarisations respectives de l'onde incidente et d'observation de l'onde diffractée. Selon ladite méthode,

- on effectue une décomposition modale de ladite matrice et l'on sélectionne les vecteurs modaux les plus significatifs de ladite matrice ainsi diagonalisée ;
- on effectue une seconde pluralité ($N^\mu$) de mesures de rapports d'amplitudes complexes d'onde diffractée et d'onde incidente pour une pluralité de couples de directions et au moins un couple de polarisations respectives de l'onde incidente et d'observation de l'onde diffractée ;
- on projette le vecteur ($\mathbf{a}^\mu$), formé par les rapports ainsi mesurés, sur lesdits vecteurs modaux les plus significatifs ;
- on génère à partir du vecteur ainsi projeté et des vecteurs modaux les plus significatifs un vecteur reconstruit ($\bar{\mathbf{a}}$) dont les composantes sont représentatives des rapports d'amplitudes complexes d'onde incidente et diffractée pour ladite première pluralité de couples de directions et de polarisations ;
- on détermine la surface équivalente radar à partir d'au moins une composante du vecteur reconstruit.

Selon une première variante, ladite décomposition modale est une diagonalisation et les vecteurs modaux/ valeurs modales sont respectivement les vecteurs propres/valeurs propres de ladite matrice.

Selon une seconde variante, ladite décomposition modale est une décomposition en valeurs singulières et que les vecteurs modaux/valeurs modales sont respectivement les vecteurs singuliers/les valeurs singulières de ladite matrice.

Selon un premier mode de réalisation, un vecteur modal $\mathbf{v_k}$, est sélectionné comme faisant partir des plus significatifs si :

$$\frac{\lambda_{k'}^2 \left\| \mathbf{v_{k'}} \right\|^2}{\left\| \sum_{k=1}^{2N} \lambda_k \mathbf{v_k} \right\|^2} > \tau_1$$

où $\lambda_k$, $\mathbf{v_k}$, $k = 1,..,2N$, sont respectivement les valeurs modales et les vecteurs modaux de la matrice du modèle, 2N est le nombre de colonnes de cette matrice, et $\tau_1$ est une valeur de seuil prédéterminée.

Selon un second mode de réalisation, un vecteur modal $\mathbf{v_{k'}}$ est sélectionné comme faisant partie des plus significatifs si :

$$\frac{\left\| \sum_{\substack{k=1 \\ k \neq k'}}^{2N} \lambda_k \mathbf{v_k} \right\|^2}{\left\| \sum_{k=1}^{2N} \lambda_k \mathbf{v_k} \right\|^2} < \tau_2$$

où $\lambda_k$, $\mathbf{v_k}$, $k = 1,..,2N$ sont respectivement les valeurs modales et les vecteurs modaux de la matrice du modèle, 2N est le nombre de colonnes de la matrice, et $\tau_2$ est une valeur de seuil prédéterminée.

Avantageusement, la projection du vecteur formé par les rapports ainsi mesurés, $\mathbf{a}^\mu$, est déterminée par :

$$\lambda^\mu = \left( \mathbf{V}^\mu \right)^+ \mathbf{a}^\mu$$

où $\lambda^\mu$ représente le vecteur des composantes de $\mathbf{a}^\mu$ sur les vecteurs modaux les plus significatifs, $(\mathbf{V}^\mu)^+$ est la matrice pseudo-inverse de $\mathbf{V}^\mu$, $\mathbf{V}^\mu$ est la matrice dont les colonnes sont lesdits vecteurs modaux les plus significatifs et dont les lignes correspondent à la seconde pluralité de rapports mesurés.

$$\widetilde{\mathbf{a}} = \mathbf{V}^s \lambda^\mu$$

où $\mathbf{V}^s$ est la matrice dont les colonnes sont lesdits vecteurs modaux les plus significatifs et dont les lignes correspondent à la première pluralité de rapports du modèle.

La surface équivalente radar $\left( \widetilde{\sigma}_{ij}^{\pi_r \pi_r} \right)$ pour un couple de directions d'onde incidente et d'observation d'onde diffractée et un couple de polarisations associées est alors obtenue à partir du module au carré ( $\left| \widetilde{a}_{ij}^{\pi_r \pi_r} \right|^2$ ) d'une composante dudit vecteur reconstruit.

Avantageusement, la matrice pseudo-inverse est obtenue par $(\mathbf{V}^\mu)^+ = (\mathbf{V}^{\mu H}\mathbf{V}^\mu)^{-1} \mathbf{V}^{\mu H}$, la matrice $\mathbf{V}^\mu$ ayant fait préalablement l'objet d'un reconditionnement matriciel si le nombre de conditionnement de la matrice $\mathbf{V}^{\mu H}\mathbf{V}^\mu$ est supérieur à un seuil prédéterminé (cond$_T$).

Le reconditionnement matriciel de $\mathbf{V}^\mu$ comprend de préférence des étapes de suppression d'au moins un vecteur colonne de $\mathbf{V}^\mu$ correspondant au mode le moins significatif, et de substitution de la composante correspondante de $\lambda^\mu$ par la valeur modale correspondante.

Lesdites étapes de reconditionnement matriciel pourront être itérées tant que le nombre de modes (s) reste supérieur à un nombre de modes minimum prédéterminé.

Alternativement, le reconditionnement matriciel de $\mathbf{V}^\mu$ comprend des étapes d'augmentation du vecteur formé des rapports mesurés par au moins une donnée de simulation pour un couple de directions d'onde incidente et d'observation d'onde diffractée $(\overline{u}_e, \overline{u}_r)$ et pour un couple de polarisations $(\pi_e, \pi_r)$ associées et d'augmentation de la matrice $\mathbf{V}^\mu$ par la ligne correspondante de $\mathbf{V}^s$.

Dans ce dernier cas, les étapes de reconditionnement matriciel pourront également être itérées tant que le nombre de données de simulation introduites reste inférieur à un nombre maximum prédéterminé ($\delta N_{max}$).

Le reconditionnement matriciel de $\mathbf{V}^\mu$ pourra encore comprendre des étapes d'augmentation du vecteur formé des rapports mesurés par au moins une mesure additionnelle pour un couple de directions d'onde incidente et d'observation d'onde diffractée ($\overline{u}_e, \overline{u}_r$) et pour un couple de polarisations ($\pi_e, \pi_r$) associées et d'augmentation de la matrice $\mathbf{V}^\mu$ par la ligne correspondante de $\mathbf{V^s}$.

Avantageusement, pour la mesure additionnelle, le couple de directions d'onde incidente et d'observation d'onde diffractée ($\overline{u}_e, \overline{u}_r$) ainsi que le couple de polarisations ($\pi_e, \pi_r$) associées pourront être choisis de manière à minimiser le nombre de conditionnement de la matrice $\mathbf{V}^{\mu\mathbf{H}}\mathbf{V}^\mu$ après augmentation de $\mathbf{V}^\mu$.

L'invention concerne enfin également un programme d'ordinateur comprenant des moyens logiciels adaptés à mettre en oeuvre les étapes de la méthode d'estimation exposée ci-dessus, lorsqu'il est exécuté par un ordinateur.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente l'organigramme d'un procédé d'estimation de SER selon un mode de réalisation de l'invention ;
Les Fig. 2 à 4 représentent de manière schématique des variantes du procédé de reconditionnement matriciel, utile pour certains modes de réalisation de l'invention ;
Les Figs. 5A et 5B représentent la SER réelle et la SER mesurée d'une cible donnée, selon deux couples de polarisation en émission et réception ;
Les Figs. 6A et 6B représentent dans les mêmes conditions, la SER réelle et la SER estimée selon le procédé d'estimation de l'invention.

## EXPOSÉ DÉTAILLÉ DE MODES DE RÉALISATION PARTICULIERS

On considérera dans la suite une cible dont on souhaite estimer la SER monostatique ou bistatique, préférentiellement mais non exclusivement en basse fréquence, au sens défini plus haut.

De manière générale, pour une fréquence $f$ donnée, la description de la SER bistatique de la cible peut s'exprimer sous forme d'une matrice de taille $2N \times 2N$ :

$$\Sigma_b = \begin{pmatrix} \sigma_{11}^{HH} & \sigma_{12}^{HH} & \cdots & \sigma_{1N}^{HH} & \sigma_{11}^{HV} & \sigma_{12}^{HV} & \cdots & \sigma_{1N}^{HV} \\ \sigma_{21}^{HH} & \sigma_{22}^{HH} & \cdots & \sigma_{2N}^{HH} & \sigma_{21}^{HV} & \sigma_{22}^{HV} & \cdots & \sigma_{2N}^{HV} \\ \vdots & \vdots & \ddots & \vdots & \vdots & \vdots & \ddots & \vdots \\ \sigma_{N1}^{HH} & \sigma_{N2}^{HH} & \cdots & \sigma_{NN}^{HH} & \sigma_{N1}^{HV} & \sigma_{N2}^{HV} & \cdots & \sigma_{NN}^{HV} \\ \sigma_{11}^{VH} & \sigma_{12}^{VH} & \cdots & \sigma_{1N}^{VH} & \sigma_{11}^{VV} & \sigma_{12}^{VV} & \cdots & \sigma_{1N}^{VV} \\ \sigma_{21}^{VH} & \sigma_{22}^{VH} & \cdots & \sigma_{2N}^{VH} & \sigma_{21}^{VV} & \sigma_{22}^{VV} & \cdots & \sigma_{2N}^{VV} \\ \vdots & \vdots & \ddots & \vdots & \vdots & \vdots & \ddots & \vdots \\ \sigma_{N1}^{VH} & \sigma_{N2}^{VH} & \cdots & \sigma_{NN}^{VH} & \sigma_{N1}^{VV} & \sigma_{N2}^{VV} & \cdots & \sigma_{NN}^{VV} \end{pmatrix} \quad (3)$$

où chaque élément $\sigma_{ij}^{\pi_e,\pi_r}$ est la valeur de la SER observée pour une onde incidente de direction $\vec{u}_i^e$ de polarisation $\pi_e = H$ ou $V$ et pour une direction de réception $\vec{u}_j^r$ avec une polarisation $\pi_r = H$ ou $V$. Les directions $\vec{u}_i^e$ et $\vec{u}_j^r$, $1, j=1,..,N$ sont avantageusement mais non nécessairement équiréparties à l'intérieur de l'angle solide $4\pi$. Par exemple, ces directions peuvent être équiréparties angulairement en gisement et roulis. On comprendra que plus N est élevé, plus la description de la SER sera précise. On choisira avantageusement $N$ de manière à ce que l'échantillonnage selon l'angle de gisement et l'angle de roulis respecte le critère de Nyquist.

La matrice $\Sigma_b$ peut encore s'exprimer sous forme plus compacte :

$$\Sigma_b = \begin{pmatrix} \sigma^{HH} & \sigma^{HV} \\ \sigma^{VH} & \sigma^{VV} \end{pmatrix} \qquad (4)$$

où $\sigma^{HH}$, $\sigma^{VH}$, $\sigma^{HV}$, $\sigma^{VV}$ sont des sous-matrices de SER de taille $N \times N$ associées aux différentes polarisations en émission et en réception. Du fait de la réciprocité de propagation, ces sous-matrices sont symétriques.

De manière similaire la description complète de la SER monostatique peut s'exprimer de manière matricielle :

$$\Sigma_m = \begin{pmatrix} \mathbf{Diag(\sigma^{HH})} & \mathbf{Diag(\sigma^{HV})} \\ \mathbf{Diag(\sigma^{VH})} & \mathbf{Diag(\sigma^{VV})} \end{pmatrix} \qquad (5)$$

où Diag(.) est un opérateur linéaire qui fait correspondre à toute matrice $\Omega$ de taille $N \times N$ une matrice diagonale de même taille, **Diag($\Omega$)**, ayant les mêmes éléments diagonaux que $\Omega$.

Les matrices $\Sigma_b$ et $\Sigma_m$ sont à valeurs réelles positives. On introduit les matrices de diffraction $\mathbf{A_b}$ et $\mathbf{A_m}$ à valeurs complexes dont les éléments ne sont pas des rapports de puissance mais des rapports d'amplitudes complexes de l'onde reçue et de l'onde incidente, autrement dit, $\mathbf{A_b} = \left( a_{ij}^{\pi_e, \pi_r} \right)$, $i,j = 1,..,N$, $\pi_e = H$ ou $V$, $\pi_r = H$ ou $V$ avec

$a_{ij}^{\pi_e, \pi_r} = \sqrt{\sigma_{ij}^{\pi_e, \pi_r}} \exp(i\psi_{ij}^{\pi_e, \pi_r})$ à un coefficient multiplicatif près, où $\psi_{ij}^{\pi_e, \pi_r}$ traduit le déphasage subi par l'onde diffractée par rapport à l'onde incidente.

On peut montrer que, si la surface de la cible est parfaitement conductrice, la matrice $\mathbf{A_b}$ est diagonalisable. Cette propriété est due au fait que l'opérateur de diffraction est lui-même diagonalisable dans une base de champs lointains caractéristiques. Par opérateur de diffraction on entend la fonction définie sur l'espace les fonctions de carré intégrable $\mathbf{L^2(R^3)}$ qui au champ lointain d'une onde entrante associe le champ lointain de l'onde sortante correspondante. Chaque champ lointain caractéristique est dû au rayonnement d'une distribution de courant à la surface de l'objet, dénommée courant caractéristique. On trouvera une théorie des courants caractéristiques dans l'article de R.F. Harrington et J.R. Mautz intitulé « Theory of caracteristic modes for conducting bodies » publié dans IEEE Trans. on Antennas and Propagation, Vol. AP-19, No. 5, 1971.

La méthode d'estimation de SER selon l'invention part d'une matrice $\mathbf{A_b}$ la plus complète possible, c'est-à-dire dont on connaît le plus grand nombre possible d'éléments $a_{ij}^{\pi_e, \pi_r}$, aussi bien en termes de directions d'émission $\vec{u}_e$ et de réception $\vec{u}_r$ qu'en termes de polarisations $\pi_e$, $\pi_r$. Cette matrice peut être obtenue avec plus ou moins de précision et pour un plus ou moins grand nombre d'éléments, soit par le calcul grâce à une modélisation de l'objet si sa forme n'est pas trop complexe, soit par une campagne de mesures effectuées sur une maquette de l'objet à échelle réduite. La matrice $\mathbf{A_b}$ constitue un modèle de diffraction de l'objet.

Lorsqu'elle est diagonalisable, la matrice $\mathbf{A_b}$ peut s'écrire comme :

$$\mathbf{A_b} = \mathbf{WDW^{-1}} \qquad (6)$$

où $\mathbf{D} = \mathbf{diag}(\lambda_1,..,\lambda_{2N})$ est la matrice diagonale ayant pour éléments les valeurs propres $\lambda_1,..,\lambda_{2N}$ de $\mathbf{A_b}$ et où $\mathbf{W}$ est la matrice de changement de base.

La matrice $\mathbf{A_b}$ peut s'exprimer grâce à la décomposition modale :

$$A_b = \sum_{k=1}^{2N} \lambda_k V_k \quad \text{avec} \quad V_k = WI_k W^{-1} \tag{7}$$

où $I_k$ est une matrice de taille $2N \times 2N$ nulle partout à l'exception du $k^{\text{ième}}$ de sa diagonale égal à 1.

Si la surface de la cible n'est pas parfaitement conductrice mais simplement diélectrique, la matrice $A_b$ n'est plus diagonalisable. Elle peut toutefois faire l'objet d'une décomposition en valeurs singulières :

$$A_b = UDV^H \tag{6'}$$

où $D = \text{diag}(\lambda_1,..,\lambda_{2N})$ est la matrice diagonale ayant pour éléments les valeurs singulières $\lambda_1,..,\lambda_{2N}$ de $A_b$, $U$ et $V$ sont des matrices unitaires et $V^H$ est la transposée conjuguée de $V$. La matrice $A_b$ peut alors s'écrire, de manière similaire à (7) :

$$A_b = \sum_{k=1}^{2N} \lambda_k V_k \quad \text{avec} \quad V_k = UI_k V^H \tag{7'}$$

Par la suite nous nous référerons aux valeurs propres ou aux valeurs singulières sous l'expression plus générale de valeurs modales.

Dans les deux cas, si l'on définit le vecteur $a_b$ de taille $4N^2$ comme la concaténation des 2N vecteurs colonne de la matrice $A_b$ et, de manière similaire, le vecteur $v_k$ comme la concaténation des vecteurs colonne de la matrice $V_k$, la relation (7) s'écrit de manière vectorielle :

$$a_b = \sum_{k=1}^{2N} \lambda_k v_k \tag{8}$$

ou encore si l'on note respectivement $\lambda$ le vecteur ayant pour composantes les valeurs modales et $V$ la matrice de taille $2N \times 2N$ dont les colonnes sont constituées par les vecteurs $v_k$ :

$$a_b = V\lambda \tag{9}$$

Chacun des vecteurs $v_k$ correspond à l'excitation d'un courant caractéristique et donc à la génération d'une onde caractéristique. Avantageusement, seuls les modes les plus significatifs, c'est-à-dire les plus énergétiques, sont sélectionnés. Pour ce faire, on peut ne retenir que les modes $k'$ qui vérifient le critère :

$$\frac{\lambda_{k'}^2 \|v_{k'}\|^2}{\left\|\sum_{k=1}^{2N} \lambda_k v_k\right\|^2} > \tau_1 \tag{10}$$

où $\tau_1$ est une valeur de seuil prédéterminée. Alternativement, la sélection peut être réalisée à partir du critère :

$$\frac{\left\| \sum_{\substack{k=1 \\ k \neq k'}}^{2N} \lambda_k \mathbf{v_k} \right\|^2}{\left\| \sum_{k=1}^{2N} \lambda_k \mathbf{v_k} \right\|^2} < \tau_2 \qquad (11)$$

Il est clair pour l'homme du métier que d'autres critères peuvent être également utilisés sans pour autant sortir du cadre de l'invention. Notamment ce critère pourra faire appel à une norme autre que la norme euclidenne.

Le seuil $(\tau_1, \tau_2)$ peut être adaptatif. Il résulte d'un compromis entre la complexité de l'algorithme et de la précision de l'estimation recherchée.

Après sélection des modes les plus énergétiques, l'expression (8) se réduit à :

$$\widetilde{\mathbf{a}}_\mathbf{b} = \sum_{k \in S} \lambda_k \mathbf{v_k} \qquad (12)$$

où $S$ est l'ensemble des modes sélectionnés. De manière équivalente, cela revient à réduire la dimensionnalité de $\lambda$ et de $\mathbf{V}$:

$$\widetilde{\mathbf{a}}_\mathbf{b}' = \mathbf{V}^s \lambda^s \qquad (13)$$

où le vecteur $\lambda^s$ est obtenu en éliminant de $\lambda$ les composantes non sélectionnées et, de même, la matrice $\mathbf{V}^s$ est obtenue à partir de $\mathbf{V}$ en supprimant les vecteurs colonne non sélectionnés. $\mathbf{V}^s$ est une matrice de taille $4N^2 \times s$ où $s = Card(S)$ est le nombre de modes sélectionnés.

On obtient ainsi un modèle de diffraction simplifié mais néanmoins pertinent de l'objet. Les vecteurs $\mathbf{v_k}$, $k \in S$, c'est-à-dire les vecteurs colonne de $\mathbf{V}^s$, engendrent un espace $E^s$, sous-espace de l'espace $E_{2N}$ engendré par les vecteurs $\mathbf{v_k}$, $k = 1,..,2N$.

On note $\mathbf{a}^\mu$ le vecteur des rapports des amplitudes complexes de l'onde diffractée et de l'onde incidente, telles que mesurées. Ce vecteur est généralement très lacunaire par rapport à $\tilde{\mathbf{a}}_\mathbf{b}$ : seules certaines directions et certaines polarisations auront généralement fait l'objet d'une mesure. Par exemple les éléments correspondants à la configuration monostatique pourront être manquants. On notera $N^\mu$ le nombre de mesures, avec $N^\mu \ll 4N^2$ mais $N^\mu \geq s$, et $\mathbf{V}^\mu$ la matrice obtenue à partir de $\mathbf{V}^s$ en éliminant les lignes pour lesquelles une mesure n'est pas disponible. $\mathbf{a}^\mu$ est donc un vecteur de taille $N^\mu$ et $\mathbf{V}^\mu$ une matrice de taille $\mathbf{N}^\mu \times s$.

Selon le principe de l'invention, le vecteur $\mathbf{a}^\mu$ est projeté sur le sous-espace $E^s$, ce qui revient à calculer le vecteur :

$$\lambda^\mu = \left( \mathbf{V}^\mu \right)^+ \mathbf{a}^\mu \qquad (14)$$

où l'on a noté $(\mathbf{V}^\mu)^+ = (\mathbf{V}^{\mu H} \mathbf{V}^\mu)^{-1} \mathbf{V}^{\mu H}$ la matrice pseudo-inverse de $\mathbf{V}^\mu$ et $\mathbf{V}^{\mu H}$ la transposée conjuguée de $\mathbf{V}^\mu$. La matrice pseudo-inverse peut être obtenue par exemple, au moyen d'une décomposition en valeurs singulières de $\mathbf{V}^\mu$. L'écart entre les composantes de $\lambda^\mu$ et les valeurs propres théoriques est dû d'une part au bruit de mesure au sens large (échos parasites, couplages, bruit au niveau de l'instrumentation etc.) et d'autre part aux différences entre le modèle et l'objet réel mesuré. On comprendra que seule le bruit de mesure projeté sur l'espace $E^s$ affecte cet écart. La projection sur $E^s$ peut être considérée comme un filtrage adapté au modèle de diffraction de l'objet, permettant d'augmenter le rapport signal à bruit des mesures effectuées.

Si l'on définit maintenant un vecteur reconstruit, $\tilde{\mathbf{a}}$, par:

$$\widetilde{\mathbf{a}} = \mathbf{V}^s \lambda^\mu \qquad (15)$$

ã est un vecteur de taille $4N^2$ qui correspond à une matrice $\widetilde{\mathbf{A}} = \left(\widetilde{a}_{ij}^{\pi_e,\pi_r}\right)$, , *i, j*=1,..,*N* de taille $2N{\times}2N$ dont les vecteurs colonne sont respectivement les 2*N* blocs de 2N composantes successives de ã. En d'autres termes la matrice **Ã** est obtenue à partir de ã, de la même façon que $\mathbf{A_b}$ s'obtient à partir de $\mathbf{a_b}$. On définit enfin la SER $\widetilde{\Sigma}$ par ses composantes

$$\widetilde{\sigma}_{ij}^{\pi_e,\pi_r} = \left|\widetilde{a}_{ij}^{\pi_e,\pi_r}\right|^2 , \quad i, j = 1,..,2N, \; \pi_e = H \text{ ou } V, \; \pi_r = H \text{ ou } V.$$

La méthode exposée plus haut peut éventuellement être itérée, la matrice **Ã** servant alors de nouveau modèle $\mathbf{A_b}$. On corrige ainsi le modèle au fur et à mesure des itérations pour le rendre plus conforme à l'objet réellement mesuré.

L'opération de filtrage et reconstruction faisant correspondre $\mathbf{a}^\mu$ à ã présente un triple intérêt :

D'une part, elle permet d'obtenir des valeurs de SER ( $\widetilde{\sigma}_{ij}^{\pi_e,\pi_r}$ ) pour des couples de directions ($\vec{U}_e$, $\vec{U}_r$) et/ou des couples de polarisations ($\pi_e,\pi_r$) non mesurées. Ainsi, à partir d'un nombre relativement faible de mesures, on obtient grâce à cette extrapolation une estimation de la SER bistatique complète $\widetilde{\Sigma}$ de l'objet. Ceci est dû au fait que les vecteurs $\mathbf{v_k}$, $k \in S$ forment une base adaptée à la détermination de la SER.

D'autre part, même pour un couple de directions ($\vec{u}_e,\vec{u}_r$) et un couple de polarisations ($\pi_e,\pi_r$) ayant fait l'objet d'une mesure, la SER $\widetilde{\sigma}_{ij}^{\pi_e,\pi_r}$ sera meilleure que celle qui aurait été obtenue directement à partir de la mesure. Ceci est dû au filtrage de bruit par projection sur l'espace $E^s$, comme expliqué précédemment.

Enfin, elle permet d'obtenir en outre une meilleure estimation de la SER que celle donnée initialement par le modèle de diffraction. En effet le modèle donne approximativement les axes propres de la SER et les mesures permettent d'estimer précisément les valeurs modales sur les axes en question.

La précision avec laquelle on pourra estimer les valeurs modales et, par conséquent la SER, dépend en grande partie du conditionnement de la matrice $\mathbf{V}^\mu$ dans (14). On rappelle que le nombre de conditionnement d'une matrice carrée $\Omega$ inversible est donnée par :

$$cond(\Omega) = \left\|\Omega^{-1}\right\| . \left\|\Omega\right\| \qquad (16)$$

où l'on a noté $\|.\|$ la norme euclidienne.

Le mauvais conditionnement de la matrice $\mathbf{V}^\mu$ peut être dû soit à un nombre de modes sélectionnés *s* trop élevé, les vecteurs $\mathbf{v_k}$, $k \in S$ étant alors quasiment liés, soit à un nombre de mesures $N^\mu$ insuffisant.

Selon une première variante de réalisation, en cas de mauvais conditionnement de la matrice, on réduit tout d'abord le nombre de modes sélectionnés, c'est-à-dire le nombre de vecteurs colonne de la matrice $\mathbf{V}^\mu$. On élimine de préférence les modes les moins énergétiques, le cas échéant de manière itérative, jusqu'à ce que :

$$cond\left(\mathbf{V}^{\mu^H}\mathbf{V}^\mu\right) < cond_T \qquad (17)$$

où $cond_T$ est une valeur de seuil prédéterminée. On obtient ainsi un sous-ensemble de modes $S'{\subset}S$ et un vecteur $\lambda^\mu$ dont les composantes sont décimées. Pour les modes manquants, c'est-à-dire ceux de *S-S',* on complète avec les valeurs modales issues du modèle. Plus précisément, on utilise alors dans (15) au lieu du vecteur $\lambda^\mu$ un vecteur $\lambda_{rec}^\mu$ dont les composantes sont :

$$\lambda^{\mu}_{reck} = \lambda^{\mu}_k \quad \text{si} \quad k \in S'$$

$$\lambda^{\mu}_{reck} = \lambda^{s}_k \quad \text{si} \quad k \in S - S' \tag{18}$$

Selon une seconde variante de réalisation, on augmente le nombre $N^{\mu}$ de mesures, autrement dit la taille du vecteur $\mathbf{a}^{\mu}$, et corrélativement le nombre de lignes de $\mathbf{V}^{\mu}$. Ce nombre peut être augmenté en faisant appel à des données de simulation. On pourra procéder par augmentation séquentielle, donnée par donnée, ou bien bloc de données par bloc de données, jusqu'à ce que l'on obtienne un nombre de conditionnement inférieur à la valeur de seuil $cond_T$. Alternativement, si plusieurs données de simulation sont disponibles, on augmentera tour à tour $\mathbf{a}^{\mu}$ avec chacune de ces données (en rajoutant corrélativement une ligne à $\mathbf{V}^{\mu}$) et l'on comparera les nombres de conditionnement qui en résultent. La donnée de simulation conduisant au plus faible nombre de conditionnement sera retenue. Ce procédé d'amélioration du conditionnement par augmentation sélective du vecteur $\mathbf{a}^{\mu}$ pourra aussi être itéré.

De manière similaire, selon une troisième variante on pourra augmenter $\mathbf{a}^{\mu}$ à partir de mesures additionnelles en choisissant, le cas échéant, ces mesures en fonction de leur impact sur le conditionnement. En effet, parmi les $4N^2\text{-}N^{\mu}$ mesures additionnelles possibles, on pourra retenir celle(s) qui minimisera(ont) le nombre de conditionnement. Pour ce faire, la matrice $\mathbf{V}^{\mu}$ est complétée tour à tour par la ligne de $\mathbf{V}^{s}$ correspondant à la mesure à rajouter (couple de polarisations $(\pi_e, \pi_r)$ et couple de directions $(\vec{u}_e, \vec{u}_r)$) et le nombre de conditionnement correspondant est calculé. On détermine alors celle qui obtient le plus faible nombre de conditionnement, ce qui donne un couple de directions $(\vec{u}^{\,f}_e, \vec{u}^{\,f}_r)$ et un couple de polarisations $(\pi^{\,f}_e, \pi^{\,f}_r)$ préférés. La mesure additionnelle est alors effectuée selon ces conditions préférées et le vecteur $\mathbf{a}^{\mu}$ est augmenté de la nouvelle mesure. On pourra également trier les nombres de conditionnement et sélectionner les couples de polarisations $(\pi_e, \pi_r)$ et de directions $(\vec{u}_e, \vec{u}_r)$ réalisant les $\Delta N^{\mu}$ plus faibles nombres de conditionnement, où $\Delta N^{\mu}$ est un entier prédéterminé. Les $\Delta N^{\mu}$ mesures additionnelles sont alors effectuées selon les conditions préférées et le vecteur $\mathbf{a}^{\mu}$ est augmenté de ces $\Delta N^{\mu}$ nouvelles mesures.

Selon une quatrième variante de réalisation, on pourra combiner les procédés d'amélioration de conditionnement selon la première variante et la seconde variante. Par exemple, on pourra d'abord essayer d'améliorer le conditionnement par réduction du nombre de modes calculés (première variante) puis, au cas où le critère (17) ne serait pas satisfait, par augmentation du nombre de mesures (seconde variante). Selon un autre exemple de combinaison, on pourra alternativement éliminer un mode calculé et rajouter une donnée de simulation jusqu'à ce que le critère (17) soit satisfait. De préférence, le nombre minimum $s$ de modes calculés, $s_{\min}$, et le nombre maximal de données de simulation que l'on pourra injecter, $\delta N^{\mu}_{\max}$, seront fixés au préalable.

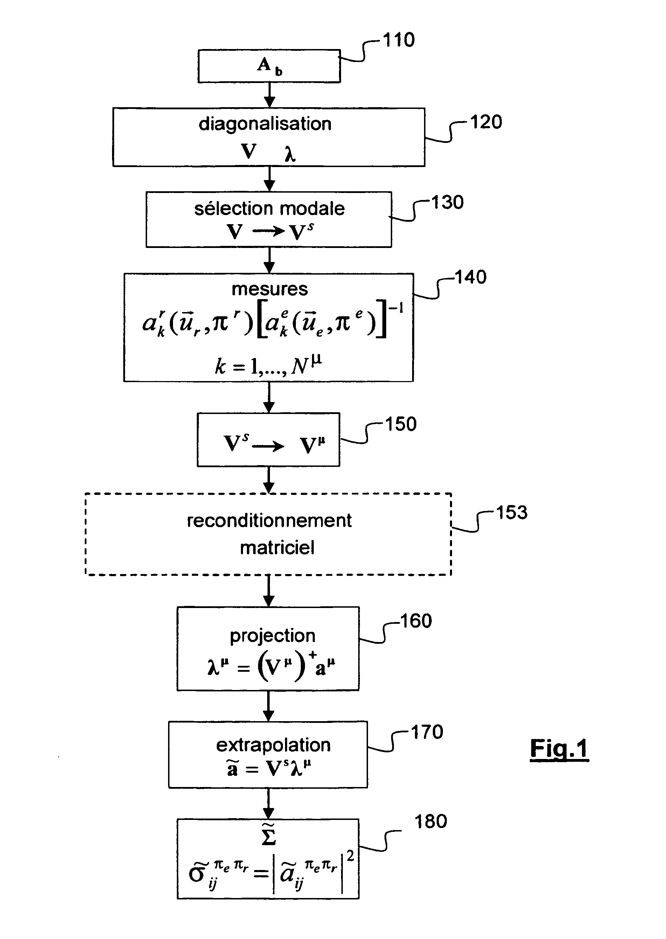

La Fig. 1 illustre de manière schématique le procédé d'estimation de SER selon un premier mode de réalisation de l'invention.

Le procédé part en 110 d'un modèle de diffraction préexistant de l'objet dont on souhaite estimer la SER. Ce modèle est défini par une matrice de diffraction $\mathbf{A_b}$ pour une pluralité de couples d'ondes incidentes et d'ondes diffractées ainsi qu'une pluralité de polarisations.

A l'étape 120, on procède à la décomposition modale, par exemple à la diagonalisation de $\mathbf{A_b}$. On obtient la matrice des vecteurs propres $\mathbf{V}$ et le vecteur des valeurs propres $\lambda$. Alternativement, on obtiendrait par une décomposition en valeurs singulières, la matrice des vecteurs singuliers et le vecteur des valeurs singulières.

A l'étape 130, on détermine l'ensemble S des modes les plus significatifs, par exemple à l'aide du critère (10) ou (11), et on réduit par suppression de colonnes la matrice $\mathbf{V}$ en la matrice $\mathbf{V}^s$ dans laquelle seuls les modes de S sont conservés.

A l'étape 140, on effectue $N^{\mu} > Card(S)$ mesures d'amplitudes complexes d'onde incidente $a^e_k(\vec{u}_e, \pi^e)$ et d'onde diffractée $a^r_k(\vec{u}_r, \pi^r)$, pour obtenir les $N^{\mu}$ rapports complexes $a^r_k(\vec{u}_r, \pi^r)\left[a^e_k(\vec{u}_e, \pi^e)\right]^{-1}$ donnant les composantes de $\mathbf{a}^{\mu}$.

A l'étape 150, on élimine de $\mathbf{V}^s$ les $4N^2\text{-}N^{\mu}$ lignes non concernées par la mesure pour obtenir $\mathbf{V}^{\mu}$.

On projette en 160 le vecteur $\mathbf{a}^{\mu}$ sur l'espace $E^s$, c'est-à-dire $\lambda^{\mu} = (\mathbf{V}^{\mu})^{+}\mathbf{a}^{\mu}$ et on calcule en 170 le vecteur filtré et extrapolé $\tilde{\mathbf{a}} = \mathbf{V}^s\lambda^{\mu}$.

En 180, la SER bistatique complète $\widetilde{\Sigma}$ est obtenue à partir de $\breve{\mathbf{a}}$ : $\widetilde{\sigma}_{ij}^{\pi_e,\pi_r} = \left| \widetilde{a}_{ij}^{\pi_e,\pi_r} \right|^2$. On peut également se contenter du calcul de certains éléments de la matrice, par exemple ceux donnant la SER monostatique, voire d'un seul pour un couple de directions et un couple de polarisations désirés.

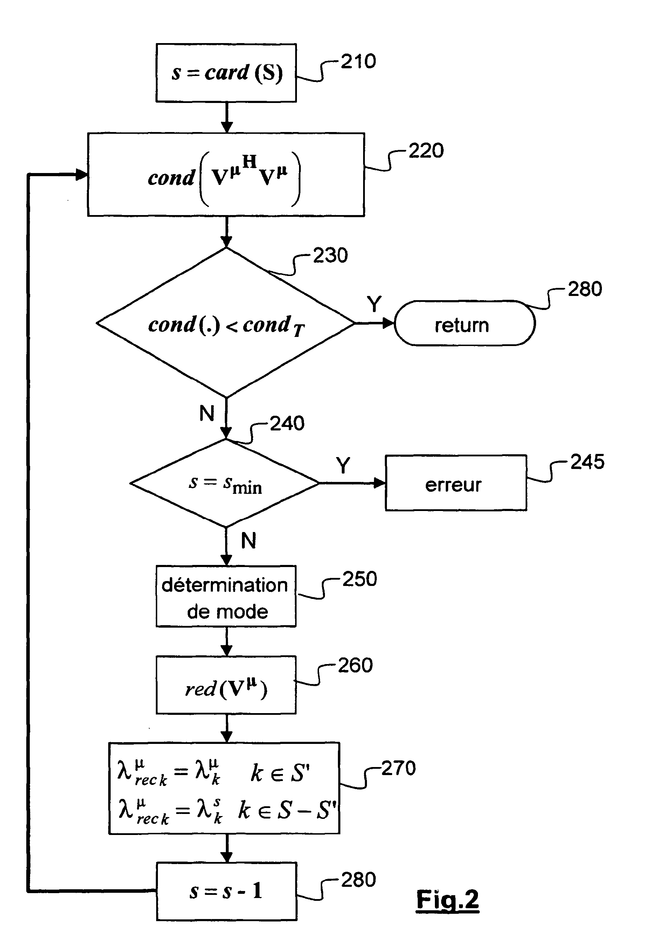

Le procédé d'estimation comprend avantageusement mais non nécessairement une étape de reconditionne-ment de la matrice $\mathbf{V}^\mu$. Cette étape de reconditionnement matriciel est détaillée en Figs. 2 à 4.

La Fig. 2 en représente une première variante.

A l'étape 210, on initialise à *card(S)* le compteur de modes *s*.

A l'étape 220, le nombre de conditionnement de la matrice $\mathbf{V}^{\mu\mathbf{H}}\mathbf{V}^\mu$ est calculé puis l'on teste en 230 si ce nombre est inférieur à une valeur de seuil $cond_T$. Dans l'affirmative, on sort en 280.

En revanche, dans la négative, on teste en 240 si *s* est égal au nombre minimum de modes calculés, $s_{min}$.

Si c'est le cas, on termine en retournant un message d'erreur en 245. Dans le cas contraire, on détermine en 250 le mode le moins significatif, c'est-à-dire la composante *k* de $\lambda^s$ de plus faible module.

En 260, on élimine de $\mathbf{V}^\mu$ le $k^{ième}$ vecteur colonne correspondant à cette composante.

En 270, on substitue dans le vecteur $\lambda^\mu$ la $k^{ième}$ composante par celle de $\lambda^\mathbf{s}$, on décrémente s en 280 puis on retourne à l'étape 220.

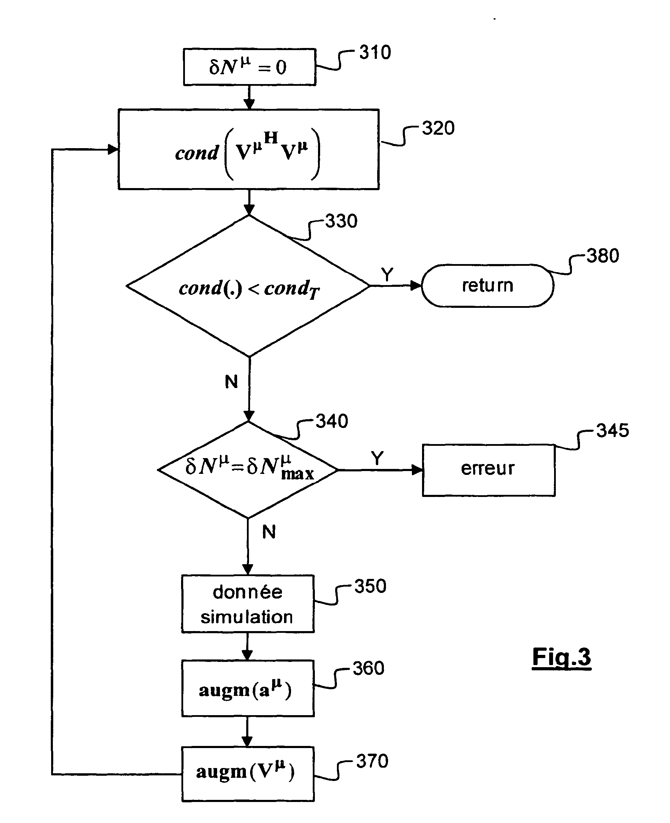

On a représenté en Fig. 3 une seconde variante du procédé de reconditionnement matriciel.

A l'étape 310, on initialise à zéro le compteur de données de simulation, $\delta N^\mu$.

A l'étape 320, le nombre de conditionnement de la matrice $\mathbf{V}^{\mu\mathbf{H}}\mathbf{V}^\mu$ est calculé puis l'on teste en 330 si ce nombre est inférieur à une valeur de seuil $cond_T$. Dans l'affirmative, on sort en 380.

En revanche, dans la négative, on teste en 340 si $\delta N^\mu$ est égal au nombre maximum de données de simulation $\delta N_{max}^\mu$.

Si c'est le cas, on termine en retournant un message d'erreur en 345. Dans le cas contraire, on choisit en 350 une donnée de simulation disponible.

En 360, on ajoute à $\mathbf{a}^\mu$ une composante supplémentaire égale à la donnée de simulation puis l'on recalcule $\mathbf{V}^\mu$ en 370.

On retourne ensuite à l'étape 320 pour le calcul du nouveau nombre de conditionnement.

On comprendra que le choix de la donnée de simulation pourra être fait en fonction du gain de conditionnement obtenu. On comprendra également, comme déjà exposé plus haut, qu'un reconditionnement matriciel selon la seconde variante peut faire suite à un reconditionnement matriciel selon la première variante. Alternativement, on fera appel tour à tour à l'un et à l'autre.

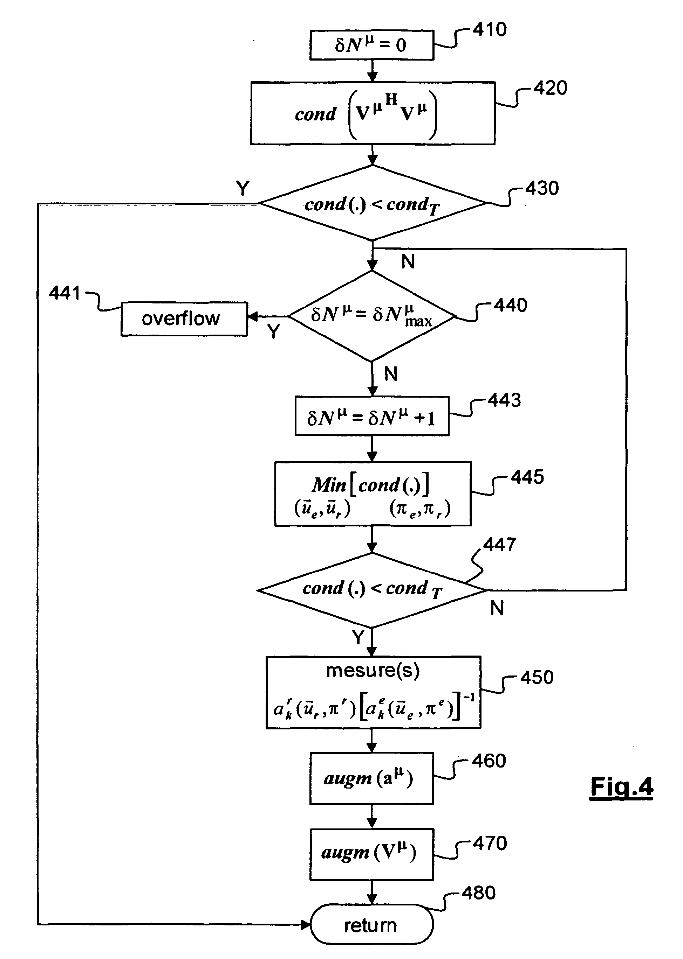

La Fig. 4 représente une troisième variante du procédé de reconditionnement matriciel.

A l'étape 410, on initialise à zéro le compteur de mesures additionnelles, $\delta N^\mu$.

A l'étape 420, le nombre de conditionnement de la matrice $\mathbf{V}^{\mu\mathbf{H}}\mathbf{V}^\mu$ est calculé puis l'on teste en 430 si ce nombre est inférieur à une valeur de seuil $cond_T$. Dans l'affirmative, on sort en 480.

En revanche, dans la négative, on teste si l'on a atteint un nombre maximal de mesures additionnelles $\delta N_{max}^\mu$. Si c'est le cas on retourne un message d'overflow en 441.

Dans la négative, on incrémente $N^\mu$ et $\delta N^\mu$ en 443. On détermine en 445 à partir de $\mathbf{V}^\mathbf{s}$ parmi les $4N^2 - N^\mu$ combinaisons de directions $(\vec{u}_e, \vec{u}_r)$ et polarisations $(\pi_e, \pi_r)$ possibles, celle susceptible de minimiser le nombre de conditionnement.

Les étapes 443 et 445 sont répétées tant que le nombre de conditionnement est supérieur à la valeur de seuil $cond_T$, comme testé en 447.

En 450, on effectue la ou les mesure (s) additionnelle(s) dans les conditions précitées et on calcule le (s) rapport (s) complexe (s) $a_k^r(\vec{u}_r, \pi^r) \left[ a_k^e(\vec{u}_e, \pi^e) \right]^{-1}$.

On rajoute en 450 à $\mathbf{a}^\mu$ la(les) composante(s) supplémentaire(s) égale(s) à ce(s) rapport(s) complexe(s), et, en 460, la (les) ligne (s) correspondante(s) à $\mathbf{V}^\mu$. Le procédé de reconditionnement matriciel se termine en 480.

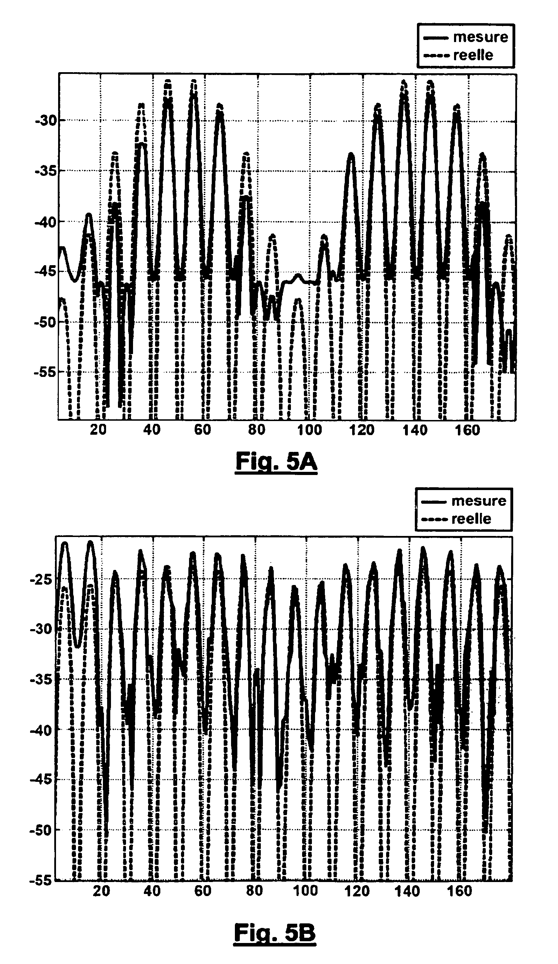

Les Figs. 5A et 5B représentent en trait discontinu la SER réelle d'un objet donné pour des polarisations $\pi^e$ et $\pi^r$ verticales, respectivement horizontales. Les directions de $\vec{u}_i^e$, $\vec{u}_j^r$ identiques (SER monostatique) dans le plan horizontal.

On a fait figurer en abscisse l'angle $\theta = \theta_e = \theta_r$ et en ordonnée la surface efficace en dB par rapport à une surface de référence arbitraire.

On a également fait figurer en trait continu la SER mesurée de manière conventionnelle, c'est-à-dire simplement sur la base des mesures complexes $a_k^r / a_k^e$ .

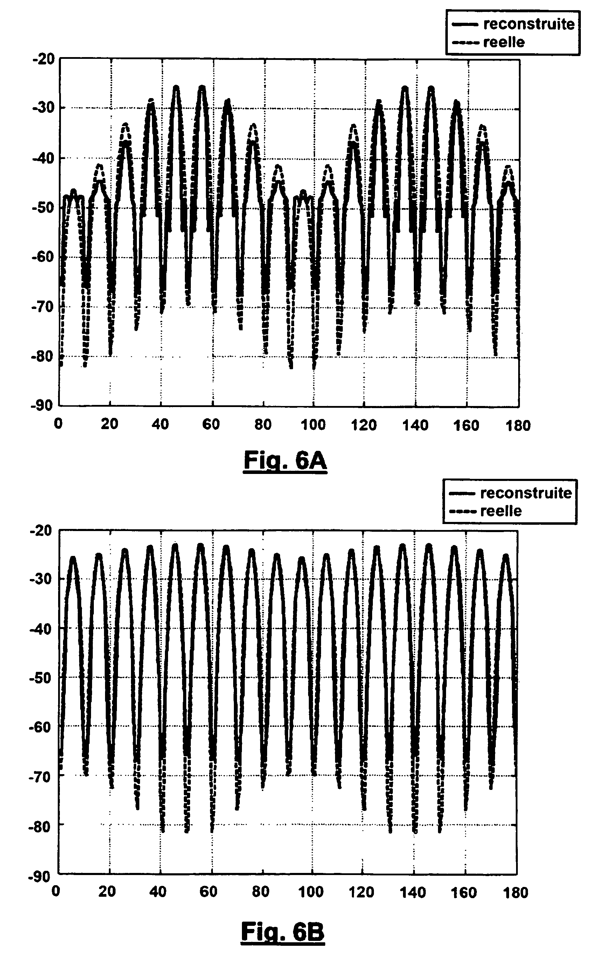

Les Figs. 6A et 6B représentent dans les mêmes conditions, en trait discontinu, la SER réelle et, en trait continu, la SER estimée selon le procédé d'estimation de l'invention sur la base d'un modèle de diffraction et les mesures précitées.

On remarque que l'estimation selon le procédé de l'invention améliore le rapport signal à bruit de la SER par rapport à l'estimation conventionnelle et qu'elle permet par ailleurs une très bonne extrapolation de la SER en dehors des points mesurés.

**Revendications**

1. Méthode d'estimation de surface équivalente radar d'un objet donné à partir d'un modèle de diffraction dudit objet, ledit modèle pouvant être représenté par une matrice ($\mathbf{A_b}$) de rapports d'amplitudes complexes d'onde diffractée et d'onde incidente, pour une première pluralité ($4N^2$) de couples de directions et de polarisations respectives de l'onde incidente et d'observation de l'onde diffractée, **caractérisée en ce que** :

   - on effectue une décomposition modale (120) de ladite matrice et l'on sélectionne (130) les vecteurs modaux les plus significatifs de ladite matrice ainsi diagonalisée ;
   - on effectue (140) une seconde pluralité ($N^\mu$) de mesures de rapports d'amplitudes complexes d'onde diffractée et d'onde incidente pour une pluralité de couples de directions et au moins un couple de polarisations respectives de l'onde incidente et d'observation de l'onde diffractée ;
   - on projette (160) le vecteur ($\mathbf{a}^\mu$), formé par les rapports ainsi mesurés, sur lesdits vecteurs modaux les plus significatifs ;
   - on génère (170) à partir du vecteur ainsi projeté et des vecteurs modaux les plus significatifs un vecteur reconstruit ($\tilde{\mathbf{a}}$) dont les composantes sont représentatives des rapports d'amplitudes complexes d'onde incidente et diffractée pour ladite première pluralité de couples de directions et de polarisations ;
   - on détermine (180) la surface équivalente radar à partir d'au moins une composante du vecteur reconstruit.

2. Méthode d'estimation selon la revendication 1, **caractérisé en ce que** ladite décomposition modale est une diagonalisation et que les vecteurs modaux et valeurs modales sont respectivement les vecteurs propres et les valeurs propres de ladite matrice.

3. Méthode d'estimation selon la revendication 1, **caractérisé en ce que** ladite décomposition modale est une décomposition en valeurs singulières et que les vecteurs modaux et valeurs modales sont respectivement les vecteurs singuliers et les valeurs singulières de ladite matrice.

4. Méthode d'estimation selon l'une des revendications précédentes, **caractérisée en ce qu'**un vecteur modal $\mathbf{v_{k'}}$ est sélectionné comme faisant partir des plus significatifs si :

$$\frac{\lambda_{k'}^2 \left\| \mathbf{v_{k'}} \right\|^2}{\left\| \sum_{k=1}^{2N} \lambda_k \mathbf{v_k} \right\|^2} > \tau_1$$

où $\lambda_k$, $\mathbf{v_k}$, $k = 1,..,2N$, sont respectivement les valeurs modales et les vecteurs modaux de la matrice du modèle, 2N est le nombre de colonnes de cette matrice, et $\tau_1$ est une valeur de seuil prédéterminée.

5. Méthode d'estimation selon l'une des revendications 1 à 3, **caractérisée en ce qu'**un vecteur modal $\mathbf{v_{k'}}$ est sélectionné comme faisant partie des plus significatifs si :

$$\frac{\left\|\sum_{\substack{k=1\\k\neq k'}}^{2N}\lambda_k\mathbf{v_k}\right\|^2}{\left\|\sum_{k=1}^{2N}\lambda_k\mathbf{v_k}\right\|^2} < \tau_2$$

où $\lambda_k$, $\mathbf{v_k}$, $k = 1,..,2N$ sont respectivement les valeurs modales et les vecteurs modaux de la matrice du modèle, 2N est le nombre de colonnes de la matrice, et $\tau_2$ est une valeur de seuil prédéterminée.

**6.** Méthode d'estimation selon l'une des revendications précédentes, **caractérisée en ce que** la projection du vecteur formé par les rapports ainsi mesurés, $\mathbf{a}^\mu$, est déterminée par :

$$\lambda^\mu = \left(\mathbf{V}^\mu\right)^+ \mathbf{a}^\mu$$

où $\lambda^\mu$ représente le vecteur des composantes de $\mathbf{a}^\mu$ sur les vecteurs modaux les plus significatifs, $(\mathbf{V}^\mu)^+$ est la matrice pseudo-inverse de $\mathbf{V}^\mu$, $\mathbf{V}^\mu$ est la matrice dont les colonnes sont lesdits vecteurs modaux les plus significatifs et dont les lignes correspondent à la seconde pluralité de rapports mesurés.

**7.** Méthode d'estimation selon la revendication 6, **caractérisée en ce que** l'on génère le vecteur reconstruit, $\tilde{\mathbf{a}}$, par :

$$\tilde{\mathbf{a}} = \mathbf{V}^s\lambda^\mu$$

où $\mathbf{V}^s$ est la matrice dont les colonnes sont lesdits vecteurs modaux les plus significatifs et dont les lignes correspondent à la première pluralité de rapports du modèle.

**8.** Méthode d'estimation selon la revendication 7, **caractérisée en ce que** la surface équivalente radar ( $\tilde{\sigma}_{ij}^{\pi,\pi_r}$ ) pour un couple de directions d'onde incidente et d'observation d'onde diffractée et un couple de polarisations associées est obtenue à partir du module au carré ( $\left|\tilde{a}_{ij}^{\pi,\pi_r}\right|^2$ )d'une composante dudit vecteur reconstruit.

**9.** Méthode d'estimation selon l'une des revendications 6 à 8, **caractérisée en ce que** la matrice pseudo-inverse est obtenue par $(\mathbf{V}^\mu)^+ = (\mathbf{V}^{\mu\mathbf{H}}\mathbf{V}^\mu)^{-1}\mathbf{V}^{\mu\mathbf{H}}$ et que la matrice $\mathbf{V}^\mu$ fait préalablement l'objet d'un reconditionnement matriciel si le nombre de conditionnement de la matrice $\mathbf{V}^{\mu\mathbf{H}}\mathbf{V}^\mu$ est supérieur à un seuil prédéterminé ($cond_T$).

**10.** Méthode d'estimation selon la revendication 9, **caractérisée en ce que** le reconditionnement matriciel de $\mathbf{V}^\mu$ comprend des étapes de suppression d'au moins un vecteur colonne de $\mathbf{V}^\mu$ correspondant au mode le moins significatif, et de substitution de la composante correspondante de $\lambda^\mu$ par la valeur modale correspondante.

**11.** Méthode d'estimation selon la revendication 10, **caractérisée en ce que** lesdites étapes de reconditionnement matriciel sont itérées tant que le nombre de modes (s) reste supérieur à un nombre de modes minimum prédéterminé.

**12.** Méthode d'estimation selon la revendication 9, **caractérisée en ce que** le reconditionnement matriciel de $\mathbf{V}^\mu$ comprend des étapes d'augmentation du vecteur formé des rapports mesurés par au moins une donnée de simulation pour un couple de directions d'onde incidente et d'observation d'onde diffractée $(\vec{u_e},\vec{u_r})$ et pour un couple de polarisations $(\pi_e,\pi_r)$ associées et d'augmentation de la matrice V'' par la ligne correspondante de $\mathbf{V}^s$.

**13.** Méthode d'estimation selon la revendication 10, **caractérisée en ce que** lesdites étapes de reconditionnement matriciel sont itérées tant que le nombre de données de simulation introduites reste inférieur à un nombre maximum prédéterminé ($\delta N_{max}$).

**14.** Méthode d'estimation selon la revendication 9, **caractérisée en ce que** le reconditionnement matriciel de $\mathbf{V}^\mu$ comprend des étapes d'augmentation du vecteur formé des rapports mesurés par au moins une mesure additionnelle pour un couple de directions d'onde incidente et d'observation d'onde diffractée $(\vec{u}_e, \vec{u}_r)$ et pour un couple de polarisations $(\pi_e, \pi_r)$ associées et d'augmentation de la matrice $\mathbf{V}^\mu$ par la ligne correspondante de $\mathbf{V}^s$.

**15.** Méthode d'estimation selon la revendication 14, **caractérisée en ce que**, pour la mesure additionnelle, le couple de directions d'onde incidente et d'observation d'onde diffractée $(\vec{u}_e, \vec{u}_r)$ ainsi que le couple de polarisations $(\pi_e, \pi_r)$ associées sont choisis pour minimiser le nombre de conditionnement de la matrice $\mathbf{V}^{\mu H}\mathbf{V}^\mu$ après augmentation de $\mathbf{V}^\mu$.

**16.** Programme d'ordinateur comprenant des moyens logiciels adaptés à mettre en oeuvre les étapes de la méthode d'estimation selon l'une des revendications précédentes, lorsqu'il est exécuté par un ordinateur.

**Claims**

**1.** A method for estimating the radar cross-section of a given object from a diffraction model of said object, said model being able to be represented by a matrix ($\mathbf{A_b}$) of ratios of diffracted wave and incident wave complex amplitude, for a first plurality ($4N^2$) of pairs of respective incident wave and diffracted wave observation directions and polarizations, **characterized in that**:

- a modal decomposition (120) of said matrix is carried out and the most significant modal vectors of said thereby diagonalized matrix are then selected (130);
- a second plurality ($N^\mu$) (140) of measurements of ratios of diffracted wave and incident wave complex amplitudes is carried out for a plurality of pairs of directions and at least one pair of respective incident wave and diffracted wave observation polarizations;
- the vector ($\mathbf{a}^\mu$) formed by the thereby measured ratios is projected (160) on said most significant modal vectors;
- from the thereby projected vector and from the most significant modal vectors, a reconstructed vector ($\tilde{\mathbf{a}}$) is generated (170), the components of which are representative of the ratios of incident and diffracted wave complex amplitudes for said first plurality of pairs of directions and of polarizations;
- the radar cross-section is determined (180) from at least one component of the reconstructed vector.

**2.** The estimation method according to claim 1, **characterized in that** said modal decomposition is a diagonalization and the modal vectors and modal values are the eigenvectors and the eigenvalues of said matrix, respectively.

**3.** The estimation method according to claim 1, **characterized in that** said modal decomposition is a decomposition into singular values and the modal vectors and modal values are the singular vectors and the singular values of said matrix, respectively.

**4.** The estimation method according to any of the preceding claims, **characterized in that** a modal vector $\mathbf{v}_{k'}$ is selected as being part of the most significant if:

$$\frac{\lambda_{k'}^2 \left\| \mathbf{v}_{k'} \right\|^2}{\left\| \sum_{k=1}^{2N} \lambda_k \mathbf{v}_k \right\|^2} > \tau_1$$

wherein $\lambda_k$, $\mathbf{v}_k$, $k = 1,..,2N,$ are the modal values and the modal vectors of the matrix of the model respectively, $2N$ is the number of columns of this matrix and $\tau_1$ is a predetermined threshold value.

**5.** The estimation method according to any of claims 1 to 3, **characterized in that** a modal vector $v_k$, is selected as being part of the most significant if:

$$\frac{\left\| \sum_{\substack{k=1 \\ k \neq k'}}^{2N} \lambda_k \mathbf{v_k} \right\|^2}{\left\| \sum_{k=1}^{2N} \lambda_k \mathbf{v_k} \right\|^2} < \tau_2$$

wherein $\lambda_k$, $\mathbf{v_k}$, $k = 1,..,2N$ are the modal values and the modal vectors of the matrix of the model, respectively, $2N$ is the number of columns of the matrix, and $\tau_2$ is a predetermined threshold value.

6. The estimation method according to any of the preceding claims, **characterized in that** the projection of the vector formed by the thereby measured ratios $\mathbf{a}^\mu$, is determined by:

$$\lambda^\mu = \left( \mathbf{V}^\mu \right)^+ \mathbf{a}^\mu$$

wherein $\lambda^\mu$ represents the vector of the components of $\mathbf{a}^\mu$ on the most significant modal vectors, $(\mathbf{V}^\mu)^+$ is the pseudo-inverse matrix of $\mathbf{V}^\mu$, $\mathbf{V}^\mu$ is the matrix, whereof the columns are said most significant modal vectors and the lines correspond to the second plurality of measured ratios.

7. The estimation method according to claim 6, **characterized in that** the reconstructed vector $\tilde{\mathbf{a}}$ is generated by:

$$\tilde{\mathbf{a}} = \mathbf{V}^s \lambda^\mu$$

wherein $\mathbf{V}^s$ is the matrix, whereof the columns are said most significant modal vectors and the lines correspond to the first plurality of ratios of the model.

8. The estimation method according to claim 7, **characterized in that** the radar cross-section $\left( \tilde{\sigma}_{ij}^{\pi_e \pi_r} \right)$ for a pair of incident wave and diffracted wave observation directions and a pair of associated polarizations is obtained from the squared module

$\left( \left| \tilde{a}_{ij}^{\pi_e \pi_r} \right|^2 \right)$ of a component of said reconstructed vector.

9. The estimation method according to any claims 6 to 8, **characterized in that** the pseudo-inverse matrix is obtained by $(\mathbf{V}^\mu)^+ = (\mathbf{V}^{\mu H} \mathbf{V}^\mu)^{-1} \mathbf{V}^{\mu H}$ and the matrix $\mathbf{V}^\mu$ is first subject to matrix reconditioning if the conditioning number of the matrix $\mathbf{V}^{\mu H} \mathbf{V}^\mu$ is larger than a predetermined threshold ($cond_T$).

10. The estimation method according to claim 9, **characterized in that** the matrix reconditioning of $\mathbf{V}^\mu$ comprises steps for removing at least one column vector of $\mathbf{V}^\mu$ corresponding to the least significant mode, and of substituting the corresponding component of $\lambda^\mu$ with the corresponding modal value.

11. The estimation method according to claim 10, **characterized in that** said matrix reconditioning steps are iterated as long as the number of modes ($s$) remains larger than a predetermined minimum number of modes.

12. The estimation method according to claim 9, **characterized in that** the matrix reconditioning of $\mathbf{V}^\mu$ comprises steps for augmenting the vector formed with the measured ratios by at least one simulation datum for a pair of incident wave and diffracted wave observation directions $(\vec{u}_e, \vec{u}_r)$ and for a pair of associated polarizations $(\pi_e, \pi_r)$ and for augmenting the matrix $\mathbf{V}^\mu$ by the corresponding line of $\mathbf{V}^s$.

13. The estimation method according to claim 10, **characterized in that** said matrix reconditioning steps are iterated as long as the number of introduced simulation data remains less than a predetermined maximum number ($\delta N_{max}$).

14. The estimation method according to claim 9, **characterized in that** the matrix reconditioning of $\mathbf{V}^\mu$ comprises steps for augmenting the vector formed with the measured ratios by at least one additional measurement for a pair of incident wave and diffracted wave observation directions $(\vec{u}_e, \vec{u}_r)$ and for a pair of associated polarizations $(\pi_e, \pi_r)$ and for augmenting the matrix $\mathbf{V}^\mu$ by the corresponding line of $\mathbf{V}^s$.

15. The estimation method according to claim 14, **characterized in that** for the additional measurement, the pair of incident wave and diffracted wave observation directions $(\vec{u}_e, \vec{u}_r)$ as well as the pair of associated polarizations $(\pi_e, \pi_r)$ are selected in order to minimize the conditioning number of the matrix $\mathbf{V}^{\mu H}\mathbf{V}^\mu$ after augmenting $\mathbf{V}^\mu$.

16. A computer program comprising software means suitable for carrying out the steps of the estimation method according to any of the preceding claims, when it is executed by a computer.

**Patentansprüche**

1. Verfahren zur Abschätzung der äquivalenten Radaroberfläche eines gegebenen Objekts ausgehend von einem Beugungsmodell des Objekts, wobei das Modell dargestellt werden kann durch eine Matrix ($\mathbf{A_b}$) von komplexen Amplitudenverhältnissen von gebeugter Welle und einfallender Welle für eine erste Mehrzahl ($4N^2$) von Paaren von Richtungen und jeweiligen Polarisationen der einfallenden Welle und der Beobachtung der gebeugten Welle, **dadurch gekennzeichnet, dass**:

   - man eine modale Zerlegung (120) der Matrix durchführt und man die signifikantesten modalen Vektoren der derart diagonalisierten Matrix auswählt (130);
   - man eine zweite Mehrzahl ($\mathbf{N}^\mu$) von Messungen von komplexen Amplitudenverhältnissen von gebeugter Welle und einfallender Welle für eine Mehrzahl von Paaren von Richtungen sowie wenigstens ein Paar von jeweiligen Polarisationen der einfallenden Welle und der Beobachtung der gebeugten Welle durchführt (140);
   - man den durch die derart gemessenen Verhältnisse gebildeten Vektor ($\mathbf{a}^\mu$) auf die signifikantesten modalen Vektoren projiziert (160);
   - man ausgehend vom derart projizierten Vektor und von den signifikantesten modalen Vektoren einen rekonstruierten Vektor (ä) generiert (170), dessen Komponenten repräsentativ sind für die komplexen Amplitudenverhältnisse von einfallender und gebeugter Welle für die erste Mehrzahl von Paaren von Richtungen und Polarisationen;
   - man die äquivalente Radaroberfläche ausgehend von wenigstens einer Komponente des rekonstruierten Vektors bestimmt (180).

2. Verfahren zur Abschätzung nach Anspruch 1, **dadurch gekennzeichnet, dass** die modale Zerlegung eine Diagonalisierung ist, und dass die modalen Vektoren und modalen Werte die Eigenvektoren bzw. die Eigenwerte der Matrix sind.

3. Verfahren zur Abschätzung nach Anspruch 1, **dadurch gekennzeichnet, dass** die modale Zerlegung eine Zerlegung in singuläre Werte ist, und dass die modalen Vektoren und die modalen Werte die singulären Vektoren und die singulären Werte der Matrix sind.

4. Verfahren zur Abschätzung nach einem der vorhergehenden Ansprüche, **dadurch gekennzeichnet, dass** ein modaler Vektor $\mathbf{v_{k'}}$ als zugehörig zu den Signifikantesten ausgewählt wird, wenn:

$$\frac{\lambda_{k'}^2 \left\| \mathbf{v}_{k'} \right\|^2}{\left\| \sum_{k=1}^{2N} \lambda_k \mathbf{v}_k \right\|} > \tau_1$$

wobei $\lambda_k$, $\mathbf{v_k}$, k=1, ...., 2N die modalen Werte bzw. die modalen Vektoren der Matrix des Modells sind, 2N die Zahl der Spalten dieser Matrix ist, und $\tau_1$ ein vorbestimmter Schwellenwert ist.

5. Verfahren zur Abschätzung nach einem der Ansprüche 1 bis 3, **dadurch gekennzeichnet, dass** ein modaler Vektor $\mathbf{v_{k'}}$ als zu den Signifikantesten gehörig ausgewählt wird, wenn:

$$\frac{\left\|\sum_{\substack{k=1 \\ k\neq k'}}^{2N} \lambda_k \mathbf{v}_k\right\|^2}{\left\|\sum_{k=1}^{2N} \lambda_k \mathbf{v}_k\right\|^2} < \tau_2$$

wobei $\lambda_k$, $\mathbf{v_k}$, k=1, ...., 2N die modalen Werte bzw. die modalen Vektoren der Matrix des Modells sind, 2N die Zahl der Spalten dieser Matrix ist, und $\tau_2$ ein vorbestimmter Schwellenwert ist.

6. Verfahren zur Abschätzung nach einem der vorhergehenden Ansprüche, **dadurch gekennzeichnet, dass** die Projektion des durch die derart gemessenen Verhältnisse gebildeten Vektors $\mathbf{a}^\mu$ bestimmt wird durch:

$$\lambda^\mu = \left(\mathbf{v}^\mu\right)^+ \mathbf{a}^\mu$$

wobei $\lambda^\mu$ den Vektor der Komponenten von $\mathbf{a}^\mu$ auf den signifikantesten modalen Vektoren repräsentiert, $(\mathbf{V}^\mu)^+$ die pseudo-inverse Matrix von $\mathbf{V}^\mu$ ist, $\mathbf{V}^\mu$ die Matrix ist, deren Spalten die signifikantesten modalen Vektoren sind und deren Zeilen der zweiten Mehrzahl von gemessenen Verhältnissen entsprechen.

7. Verfahren zur Abschätzung nach Anspruch 6, **dadurch gekennzeichnet, dass** man den rekonstruierten Vektor ä generiert durch:

$$\tilde{\mathbf{a}} = \mathbf{V}^s \lambda^\mu$$

wobei $\mathbf{V^s}$ die Matrix ist, deren Spalten die signifikantesten modalen Vektoren sind und deren Zeilen der ersten Mehrzahl von Verhältnissen des Modells entsprechen.

8. Verfahren zur Abschätzung nach Anspruch 7, **dadurch gekennzeichnet, dass** die äquivalente Radaroberfläche $\left(\tilde{\sigma}_{ij}^{\pi,\pi_r}\right)$ für ein Paar von Richtungen der einfallenden Welle und der Beobachtung der gebeugten Welle und ein Paar von zugeordneten Polarisationen erhalten wird ausgehend vom Betrag im Quadrat $\left(\left|\tilde{\mathbf{a}}_{ij}^{\pi,\pi_r}\right|^2\right)$ einer Komponente des rekonstruierten Vektors.

9. Verfahren zur Abschätzung nach einem der Ansprüche 6 bis 8, **dadurch gekennzeichnet, dass** die pseudo-inverse Matrix erhalten wird durch $(\mathbf{V}^\mu)^+ = (\mathbf{V}^{\mu H}\mathbf{V}^\mu)^{-1} \mathbf{V}^{\mu H}$, und dass die Matrix $\mathbf{V}^\mu$ zuvor Gegenstand einer Matrix-Rekonditionierung ist, wenn die Konditionszahl der Matrix größer als eine vorbestimmte Schwelle ($\text{cond}_T$) ist.

10. Verfahren zur Abschätzung nach Anspruch 9, **dadurch gekennzeichnet, dass** die Matrix-Rekonditionierung von $\mathbf{V}^\mu$ Schritte des Unterdrückens wenigstens eines Spaltenvektors von $\mathbf{V}^\mu$ enthält, der der am wenigstens signifikanten Mode entspricht, sowie der Ersetzung der entsprechenden Komponente von $\lambda^\mu$ durch den entsprechenden modalen Wert.

11. Verfahren zur Abschätzung nach Anspruch 10, **dadurch gekennzeichnet, dass** die Schritte der Matrix-Rekonditionierung iteriert werden, solange die Zahl der Moden (s) größer bleibt als eine vorbestimmte minimale Zahl von Moden.

12. Verfahren zur Abschätzung nach Anspruch 9, **dadurch gekennzeichnet, dass** die Matrix-Rekonditionierung von $\mathbf{V}^\mu$ Schritte der Vergrößerung des durch die gemessenen Verhältnisse gebildeten Vektors um wenigstens einen Simulationsdatenwert für ein Paar von Richtungen der einfallenden Welle und der Beobachtung der gebeugten

Welle ($\vec{u}_e,\vec{u}_r$) und für ein Paar von zugeordneten Polarisationen ($\pi_e,\pi_r$) sowie der Vergrößerung der Matrix $\mathbf{V}^\mu$ um die entsprechende Zeile von $\mathbf{V^s}$ umfaßt.

13. Verfahren zur Abschätzung nach Anspruch 10, **dadurch gekennzeichnet, dass** die Schritte der Matrix-Rekonditionierung iteriert werden, solange die Zahl von eingeführten Simulationsdatenwerten kleiner bleibt als eine vorbestimmte maximale Zahl ($\delta N_{max}$).

14. Verfahren zur Abschätzung nach Anspruch 9, **dadurch gekennzeichnet, dass** die Matrix-Rekonditionierung von $\mathbf{V}^\mu$ Schritte der Vergrößerung des durch die gemessenen Verhältnisse gebildeten Vektors um wenigstens eine zusätzliche Messung für ein Paar von Richtungen der einfallenden Welle und der Beobachtung der gebeugten Welle ($\vec{u}_e,\vec{u}_r$) und für ein Paar von zugeordneten Polarisationen ($\pi_e,\pi_r$) und der Vergrößerung der Matrix $\mathbf{V}^\mu$ um die entsprechende Zeile von $\mathbf{V^s}$ umfaßt.

15. Verfahren zur Abschätzung nach Anspruch 14, **dadurch gekennzeichnet, dass** für die zusätzliche Messung das Paar von Richtungen der einfallenden Welle und der Beobachtung der gebeugten Welle ($\vec{u}_e,\vec{u}_r$) sowie das Paar von zugeordneten Polarisationen ($\pi_e,\pi_r$) ausgewählt werden, um die Konditionszahl der Matrix $\mathbf{V}^{\mu H}\mathbf{V}^\mu$ nach Vergrößerung von $\mathbf{V}^\mu$ zu minimieren.

16. Computerprogramm, umfassend Software-Mittel, die dazu ausgelegt sind, die Schritte des Verfahrens zur Abschätzung nach einem der vorhergehenden Ansprüche auszuführen, wenn es von einem Computer ausgeführt wird.

$$A_b$$ — 110

diagonalisation
$$V \quad \lambda$$ — 120

sélection modale
$$V \longrightarrow V^s$$ — 130

mesures
$$a_k^r(\vec{u}_r, \pi^r)\left[a_k^e(\vec{u}_e, \pi^e)\right]^{-1}$$
$$k = 1, \ldots, N^\mu$$ — 140

$$V^s \longrightarrow V^\mu$$ — 150

reconditionnement
matriciel — 153

projection
$$\lambda^\mu = \left(V^\mu\right)^+ a^\mu$$ — 160

extrapolation
$$\widetilde{a} = V^s \lambda^\mu$$ — 170

Fig.1

$$\widetilde{\widetilde{\Sigma}}$$
$$\widetilde{\sigma}_{ij}^{\pi_e \pi_r} = \left| \widetilde{a}_{ij}^{\pi_e \pi_r} \right|^2$$ — 180

$$s = card\ (S)$$ 210

$$cond\left(\mathbf{V}^{\mu^{\mathbf{H}}}\mathbf{V}^{\mu}\right)$$ 220

230

$$cond(.) < cond_T$$ —Y→ return 280

N

240

$$s = s_{min}$$ —Y→ erreur 245

N

détermination de mode 250

$$red(\mathbf{V}^{\mu})$$ 260

$$\lambda_{rec\,k}^{\mu} = \lambda_k^{\mu} \quad k \in S'$$
$$\lambda_{rec\,k}^{\mu} = \lambda_k^{s} \quad k \in S - S'$$
270

$$s = s - 1$$ 280

**Fig.2**

$$\delta N^{\mu} = 0 \quad \text{310}$$

$$cond\left(V^{\mu H}V^{\mu}\right) \quad \text{320}$$

330

$$cond(.) < cond_T \quad \xrightarrow{Y} \quad \text{return} \quad \text{380}$$

N

340

$$\delta N^{\mu} = \delta N^{\mu}_{max} \quad \xrightarrow{Y} \quad \text{erreur} \quad \text{345}$$

N

donnée simulation  350

$$augm(a^{\mu}) \quad \text{360}$$

$$augm(V^{\mu}) \quad \text{370}$$

**Fig.3**

21

$$\delta N^{\mu} = 0 \quad \text{—} 410$$

$$cond \left( \mathbf{V}^{\mu H} \mathbf{V}^{\mu} \right) \quad \text{—} 420$$

Y    $cond(.) < cond_T$    430

N

441    overflow    $\delta N^{\mu} = \delta N^{\mu}_{max}$    440

Y

N

$$\delta N^{\mu} = \delta N^{\mu} + 1 \quad \text{—} 443$$

$$\begin{array}{c} Min\left[ cond(.) \right] \\ (\vec{u}_e, \vec{u}_r) \qquad (\pi_e, \pi_r) \end{array} \quad \text{—} 445$$

447

$cond(.) < cond_T$    N

Y

$$\begin{array}{c} mesure(s) \\ a_k^r(\vec{u}_r, \pi^r) \left[ a_k^e(\vec{u}_e, \pi^e) \right]^{-1} \end{array} \quad \text{—} 450$$

$$augm\left( a^{\mu} \right) \quad \text{—} 460$$

$$augm\left( \mathbf{V}^{\mu} \right) \quad \text{—} 470$$

480

return

**Fig.4**

**Fig. 5A**

**Fig. 5B**

**Fig. 6A**

**Fig. 6B**

## RÉFÉRENCES CITÉES DANS LA DESCRIPTION

**Documents brevets cités dans la description**

- US 6756935 B

**Littérature non-brevet citée dans la description**

- **G.T. Tuck et al.** Radar cross-section Handbook. Peninsula Publishing

- **R.F. Harrington ; J.R. Mautz.** Theory of caracteristic modes for conducting bodies. *IEEE Trans. on Antennas and Propagation,* 1971, vol. AP-19 (5